# EUROPÄISCHE PATENTANMELDUNG

(11) **EP 4 813 554 A1**
(43) Veröffentlichungstag der Anmeldung: **30.09.2026**
(21) Anmeldenummer: 26166488.2
(22) Anmeldetag: 20.03.2026
(51) Int. Cl.: B23C 3/02, B23C 5/10

(54) **FRÄS- UND/ODER SCHLEIFWERKZEUG UND DREHBEARBEITUNGS-VERFAHREN MIT EINEM FRÄS- UND/ODER SCHLEIFWERKZEUG**

(30) Priorität: 24.03.2025 DE 102025111282
(71) Anmelder: FRANKEN GmbH & Co. KG Fabrik für Präzisionswerkzeuge, 90607 Rückersdorf (DE)
(72) Erfinder: Glimpel, Helmut, Lauf a. d. Pegnitz (DE); Kirsch, Andreas, Rosdorf (DE); Ahrens, Dieter, Rückersdorf (DE)
(74) Vertreter: Meissner Bolte Nürnberg

(57) **Zusammenfassung**

Fräs- und/oder Schleifwerkzeug, insbesondere Dentalfräs- oder Dentalschleifwerkzeug (10, 100), umfassend einen Schaft (12, 120, 140) und einen Arbeitsteil (14, 140), wobei der Arbeitsteil (14, 140) wenigstens einen teilweise kugelförmig ausgebildeten Stirnbereich (20, 200) und einen sich in Richtung auf den Stirnbereich (20, 200) hin verjüngenden, insbesondere konisch geformten, Abschnitt (18, 180) aufweist, wobei der Stirnbereich (20, 200) geometrisch bestimmte und/oder geometrisch unbestimmte Schneiden umfasst (80a, 80b, 91) und wobei der Arbeitsteil (14, 140), insbesondere der sich verjüngende Abschnitt (18, 180), einen ersten Bereich (18a, 180a) mit geometrisch bestimmte und/oder geometrisch unbestimmte Schneiden (80a, 80b, 91) und wenigstens einen zweiten, schneidenlosen Bereich (18b, 180b)) umfasst, wobei der sich verjüngende Abschnitt (18, 180) so ausgebildet ist, dass er ein erstes Zeitspanvolumen (ZSV₁) abtragen kann, wobei der Stirnbereich (20, 200) so ausgebildet ist, dass er ein zweites Zeitspanvolumen (ZSV₂) abtragen kann und wobei das erste Zeitspanvolumen (ZSV₁) bei gleicher Drehzahl (n_{F}) des Fräs- und/oder Schleifwerkzeug größer ist als das zweite Zeitspanvolumen (ZSV₂).

## Beschreibung

Die vorliegende Erfindung betrifft ein Fräs- und/oder Schleifwerkzeug und ein Verfahren zur Drehbearbeitung mit einem Fräs- und/oder Schleifwerkzeug. Insbesondere betrifft die Erfindung ein Fräs- und/oder Schleifwerkzeug und ein Verfahren zur Drehbearbeitung mit einem solchen Fräs- und/oder Schleifwerkzeugs zur Herstellung von Komponenten für den Einsatz innerhalb oder nahe am menschlichen Körper, beispielsweise zur Herstellung von Elementen für die prothetische Dentalversorgung, wie sogenannten Abutments oder Zahnkronen, der Otoplastik, wie Gehörschutz oder Hörhilfen, oder auch anderen medizintechnischen Produkten oder Komponenten.

Die Druckschrift EP 1 810 637 A1 beschreibt einen Dentalfräser mit einem an einem Schaft befestigten Fräskopf, welcher im Wesentlichen konisch ausgebildet und mit mehreren Schneiden versehen ist.

Die Druckschrift WO 2013/164068 A1 beschreibt einen Dentalfräser und ein Fräsverfahren zum Herstellen von Zahnersatzteilen. Der Dentalfräser umfasst einen halbkugelförmig abgerundeten Kugelkopfabschnitt auf, der in einen Axialschneidabschnitt übergeht, der in Axialrichtung mit konstantem Durchmesser verläuft.

DE 10 2005 001 600 B4 offenbart ein Verfahren zur Material abtragenden Bearbeitung von Werkstücken, bei dem das Werkstück durch Eingriff eines wenigstens abschnittsweise zylindrischen und/oder kegelstumpfförmigen rotierenden Fräswerkzeugs bearbeitet wird und wobei das rotierende Fräswerkzeug sowohl stirnseitig als auch mantelseitig mit dem Werkstück in Eingriff gebracht wird.

EP 3 332 737 B1 offenbart ein Verfahren zum Erzeugen eines Dentalrestaurationsteils mit einer Dentalbearbeitungsmaschine, die einen Mehrachsen-Werkstückarm und mindestens eine Werkzeugspindel aufweist. Dabei befindest sich das Werkzeug während der Bearbeitung in fortwährendem Kontakt mit dem Werkstück, indem es im Wesentlichen spiralförmig das vollständige Außenprofil des Werkstücks bearbeitet. Die Dentalbearbeitungsmaschine ist dabei als 5/0-Achsen-Fräsmaschine ausgebildet, also mit fünf Achsen für den Mehrachsen-Werkstückarm und null Achsen für das Bearbeitungswerkzeug.

Es ist Aufgabe der Erfindung die Herstellung von feintechnischen oder feinmechanischen Komponenten, insbesondere für den Einsatz innerhalb oder nahe am menschlichen Körper und besonders für die prothetische Dentalversorgung, die Otoplastik oder für andere medizintechnische Produkte und insbesondere die Herstellung von Abutments oder Zahnkronen, zu verbessern.

Die Aufgabe wird gemäß der Erfindung gelöst durch ein Fräs- und/oder Schleifwerkzeug, insbesondere ein Dentalfräs- oder Dentalschleifwerkzeug, umfassend einen Schaft und einen Arbeitsteil, wobei der Arbeitsteil wenigstens einen teilweise kugelförmig ausgebildeten Stirnbereich und einen sich in Richtung auf den Stirnbereich hin verjüngenden, insbesondere konisch geformten, Abschnitt aufweist, wobei der Stirnbereich geometrisch bestimmte und/oder geometrisch unbestimmte Schneiden umfasst und wobei der Arbeitsteil, insbesondere der sich verjüngende Abschnitt, einen ersten Bereich mit geometrisch bestimmte und/oder geometrisch unbestimmte Schneiden und wenigstens einen zweiten, schneidenlosen Bereich umfasst, wobei der sich verjüngende Abschnitt so ausgebildet ist, dass er ein erstes Zeitspanvolumen abtragen kann, wobei der Stirnbereich so ausgebildet ist, dass er ein zweites Zeitspanvolumen abtragen kann und wobei das erste Zeitspanvolumen bei gleicher Drehzahl des Fräs- und/oder Schleifwerkzeugs größer ist als das zweite Zeitspanvolumen.

Mit einem erfindungsgemäßen Fräs- und/oder Schleifwerkzeug wird ein vorteilhaftes Herstellungsverfahren zur Herstellung von Komponenten für den Einsatz innerhalb oder nahe am menschlichen Körper und besonders von Elementen für die prothetische Dentalversorgung und insbesondere von Abutments möglich. Durch die Formgebung des Arbeitsteils mit einem sich auf den Stirnbereich hin verjüngenden Abschnitt wird die Steifigkeit des Fräs- und/oder Schleifwerkzeug so erhöht, dass ein Drehbearbeitungsverfahren möglich wird, bei dem Schrupp- und Schlichtbearbeitung in einem Arbeitsgang mit demselben Werkzeug möglich werden. Anders ausgedrückt können sowohl der sich verjüngende Abschnitt als auch der Stirnbereich spanabtragend in den Werkstückrohling eingreifen. Dabei ist der sich verjüngende Abschnitt so ausgebildet, dass mit diesem eine Schruppbearbeitung mit einem relativ großen abzutragenden Spanvolumen durchgeführt wird und der Stirnabschnitt ist so ausgebildet, dass mit diesem eine Schlicht oder Feinschlichtbearbeitung mit einem relativ geringen abzutragenden Spanvolumen durchgeführt wird. Auf diese Weise ist es möglich ein Werkstück gleichzeitig schruppend und schlichtend zu bearbeiten. Durch den sich verjüngende Abschnitt ist die Steifigkeit des Fräs- und/oder Schleifwerkzeug so weit erhöht, dass die hohen Belastungen während der gleichzeitigen Durchführung der Schrupp- und Schlichtbearbeitung ertragen werden können. Als geometrisch bestimmte Schneiden sollen Schneiden verstanden werden, deren Geometrie und Anzahl bekannt sind. Geometrisch bestimmte Schneiden können in vorteilhafter Weise durch ein Laserbearbeitungsverfahren hergestellt werden. Als geometrisch unbestimmte Schneiden sollen Schneiden verstanden werden, bei denen weder Geometrie der Schneiden noch deren Anzahl bekannt ist.

Eine vorteilhafte Ausgestaltung umfasst dabei, dass ein sich über eine erste axiale Länge erstreckender Teilbereich des sich verjüngenden Abschnitts so ausgebildet ist, dass er das erste Zeitspanvolumen abtragen kann, und wobei der sich über eine zweite axiale Länge erstreckende Stirnbereich so ausgebildet ist, dass er das zweite Zeitspanvolumen abtragen kann, wobei die erste axiale Länge und die zweite axiale Länge gleich lang sind.

Der sich verjüngende Abschnitt und der Stirnbereich sind somit so ausgebildet, dass der sich verjüngende Abschnitt im Bereich einer ersten axialen Länge oder einer axialen Erstreckung ein höheres Zeitspanvolumen abtragen kann als der Stirnbereich über eine zweite axiale Länge oder axiale Erstreckung, die genauso lang ist wie die erste axiale Länge oder axiale Erstreckung. Dies kann beispielsweise dadurch erreicht werden, dass der Stirnbereich im Bereich der zweiten axialen Länge weniger Schneiden aufweist als der sich verjüngende Abschnitt im Bereich der ersten axialen Länge oder dass die Schneiden des Stirnbereichs im Bereich der zweiten axialen Länge eine geringere Zerspanleistung aufweisen als die Schneiden des sich verjüngenden Abschnitts im Bereich der ersten axialen Länge.

In einer weiteren vorteilhaften Ausgestaltung ist vorgesehen, dass der erste Bereich geometrisch bestimmte Schneiden aufweist, die gedrallt um eine Werkzeuglängsachse des Fräs- und/oder Schleifwerkzeugs umlaufend und insbesondere durchgehend, vorzugsweise querhiebfrei, ausgebildet sind,
und/oder
dass der Stirnbereich geometrisch bestimmte Schneiden umfasst. Die geometrisch bestimmten Schneiden des Stirnbereichs können gedrallt um eine Werkzeuglängsachse des Fräs- und/oder Schleifwerkzeug umlaufend und insbesondere durchgehend, vorzugsweise querhiebfrei, ausgebildet sind. Alternativ können sich die geometrisch bestimmten Schneiden des Stirnbereichs auch beispielsweise geradlinig oder gekrümmt radial von der Werkzeugachse weg erstrecken.

Auf diese Weise kann ein vorteilhaft gestalteter Fräser ausgebildet sein, der hohe Anforderungen an eine Steifigkeit im Betrieb erfüllt.

Ferner kann es vorteilhaft sein, wenn der erste Bereich ausschließlich geometrisch unbestimmte Schneiden umfasst,
und/oder
dass der Stirnbereich ausschließlich geometrisch unbestimmte Schneiden umfasst.

Auf diese Weise kann ein vorteilhaft gestaltetes Schleifwerkzeug, insbesondere in Form eines Schleifstifts ausgebildet sein, der die hohen Anforderungen an eine Steifigkeit im Betrieb erfüllt.

Gleichfalls kann es vorteilhaft sein, ein kombiniertes Fräs- und Schleifwerkzeug bereitzustellen, bei dem entweder der sich verjüngende Abschnitt oder der Stirnbereich geometrisch bestimmte Schneiden aufweist und der entsprechend andere geometrisch unbestimmte Schneiden. Ebenfalls ist es möglich, dass in dem sich verjüngenden Abschnitt und/oder dem Stirnbereich sowohl geometrisch bestimmte Schneiden als auch geometrisch unbestimmte Schneiden vorgesehen sind.

Zudem kann es vorteilhaft sein, wenn der sich verjüngende Abschnitt den zweiten, schneidenlosen, Bereich umfasst.

Das Vorsehen eines schneidenlosen Bereichs innerhalb des sich verjüngenden Abschnitts kann zu einer weiter erhöhten Werkzeugsteifigkeit beitragen.

In einer vorteilhaften Ausführungsform weist der Stirnbereich eine Anzahl N₁ Schneiden auf und der sich verjüngende Abschnitt weist eine Anzahl N₂ Schneiden auf, wobei die Anzahl N₁ der Schneiden des Stirnbereichs kleiner ist als die Anzahl N₂ der Schneiden des sich verjüngenden Abschnitts.

Durch die größere Anzahl Schneiden kann mit dem sich verjüngenden Abschnitt ein großes Spanvolumen pro Zeiteinheit abgenommen werden, was bei der Schruppbearbeitung wünschenswert ist. Insbesondere ist dadurch eine hohe Schnittgeschwindigkeit ermöglicht. Durch die geringere Anzahl Schneiden an dem Stirnbereich kann dieser nur ein geringeres Spanvolumen pro Zeiteinheit abnehmen oder abtragen. Ebenso ist die maximal erreichbare Spandicke reduziert. Somit ist der teilweise kugelförmige Stirnbereich für eine Feinbearbeitung, wie beispielsweise eine Schlichtbearbeitung oder die Feinschlichtbearbeitung, vorteilhaft ausgebildet.

Ferner kann es vorteilhaft sein, wenn der sich verjüngende Abschnitt ein konisch geformter Abschnitt ist und einen Konuswinkel von 2° bis 7°, insbesondere von 3° bis 6°, vorzugsweise von 5°, relativ zu der Werkzeuglängsachse des Fräs- und/oder Schleifwerkzeugs aufweist.

Konuswinkel von 2° bis 7°, insbesondere von 3° bis 6°, vorzugsweise von 5°, sind insbesondere dann vorteilhaft, wenn mit den angegebenen Winkeln sowohl ein vorteilhafter Radius des teilweise kugelförmigen Stirnbereichs als auch eine vorteilhafte Schneidenlänge, beziehungsweise ein vorteilhaftes Verhältnis von freier Halslänge zu einer Schneidenlänge des Fräs- und/oder Schleifwerkzeugs für die Schneiden an dem konusförmigen Bereich ermöglicht werden.

Alternativ zu einer Gestaltung mit einer Konusform kann der sich verjüngende Abschnitt konkav oder konvex geformt sein oder sich gestuft oder wellenförmig verjüngen oder eine Mischform aus diesen Formen aufweisen.

Alternativ oder zusätzlich ist es möglich, dass der sich verjüngende Abschnitt, insbesondere unmittelbar, so in den teilweise kugelförmig ausgebildeten Stirnbereich übergeht, dass ein im Wesentlichen genau halbkugelförmig ausgebildeter Stirnbereich bereitgestellt ist oder dass der sich verjüngende Abschnitt so in den teilweise kugelförmig ausgebildeten Stirnbereich übergeht, dass ein im Wesentlichen mehr als halbkugelförmig ausgebildeter Stirnbereich bereitgestellt ist oder dass der sich verjüngende Abschnitt so in den teilweise kugelförmig ausgebildeten Stirnbereich übergeht, dass ein im Wesentlichen weniger als halbkugelförmig ausgebildeter Stirnbereich bereitgestellt ist.

Zusätzlich kann der konisch geformte Abschnitt einen Konusbasisdurchmesser von 2,3mm bis 3,8mm, insbesondere von 2,8mm bis 3,3mm, vorzugsweise von 3,0mm oder 3,033mm, aufweisen.

Mit einem Konusbasisdurchmesser innerhalb der angegebenen Werte ist eine besonders gute Steifigkeit des Fräswerkzeugs erzielbar.

Eine weitere vorteilhafte Ausführungsform ist definiert, indem der teilweise kugelförmig ausgebildete Stirnbereich einen Kugelradius von 0,5mm bis 1,2mm, insbesondere von 0,6mm bis 0,9mm, vorzugsweise von 0,7mm, aufweist.

Mit einem Radius mit den angegebenen Werten können sehr feine Konturen mit hohen Toleranzanforderungen hergestellt werden. Ein solcher Radius ist insbesondere vorteilhaft in Zusammenwirkung mit einem vorteilhaften Konuswinkel und/oder einer vorteilhaften Schneidenlänge, beziehungsweise mit einem vorteilhaften Verhältnis von freier Halslänge zu Schneidenlänge des Fräs- und/oder Schleifwerkzeugs.

Darüber hinaus kann es vorteilhaft sein, wenn ein Verhältnis einer freien Halslänge des Fräs- und/oder Schleifwerkzeugs zu einer Schneidenlänge des Fräs- und/oder Schleifwerkzeug von 2:1 bis 1, insbesondere von 3:2, 4:3, 5:4, 6:5 oder 7:6, vorgesehen ist.

Ein vorteilhaftes Verhältnis von freier Halslänge zu Schneidenlänge bietet eine hohe Steifigkeit des Arbeitsbereichs, so dass insbesondere bei einer radial auf den Arbeitsbereich wirkenden Kraft im Betrieb ein Verbiegen des Schaftfräsers verhindert oder zumindest reduziert ist. Insbesondere ist ein derartiges Verhältnis vorteilhaft in Zusammenwirkung mit einem vorteilhaften Konuswinkel und/oder vorteilhaftem Radius des teilweise kugelförmigen Stirnbereichs.

Eine weitere vorteilhafte Ausführungsform ist definiert dadurch, dass wenigstens ein begrenzter Oberflächenbereich des Fräs- und/oder Schleifwerkzeugs, insbesondere ein begrenzter Oberflächenbereich des Stirnbereichs, vorzugsweise ein Teilbereich einer Stirnschneide oder einer Spanfläche des Stirnbereichs oder eine Freifläche des Stirnbereichs oder eine Spanfläche oder eine Freifläche des sich verjüngenden Abschnitts einen Mittenrauhwert Rₐ von weniger als 0,4µm oder von weniger als 0,35µm aufweist,
und/oder
dass wenigstens ein begrenzter Oberflächenbereich des Fräs- und/oder Schleifwerkzeugs, insbesondere ein begrenzter Oberflächenbereich des Stirnbereichs, vorzugsweise ein Teilbereich einer Stirnschneide oder einer Spanfläche des Stirnbereichs oder einer Freifläche des Stirnbereichs oder eine Spanfläche oder eine Freifläche des sich verjüngenden Abschnitts eine gemittelte Rautiefe R_{Z} von weniger als 3,0µm, vorzugsweise von weniger als 2,5µm oder 2,4µm aufweist.

Mit derartig ausgestalteten Fräs- und/oder Schleifwerkzeugen können Werkstücke mit sehr hoher Oberflächengüte erzeugt werden.

Die Aufgabe der Erfindung wird zudem gelöst durch ein Drehbearbeitungssystem, insbesondere ein Drehfrässystem, umfassend eine Drehspindel und eine Frässpindel mit einem erfindungsgemäßen Fräs- und/oder Schleifwerkzeug.

Ein solches Drehbearbeitungssystem, insbesondere Drehfrässystem, ermöglicht ein Drehbearbeitungsverfahren, insbesondere ein Drehfräsverfahren, zur Herstellung von Elementen für die prothetische Dentalversorgung, für die Otoplastik oder für medizintechnische Produkte mit einem erfindungsgemäßen Fräs- und/oder Schleifwerkzeug, insbesondere einem zur Verwendung in einem Drehfräsverfahren ausgelegten und ausgebildeten Dentalfräser.

Mit einem solchen Drehbearbeitungssystem, insbesondere Drehfrässystem, ist es möglich feintechnische oder feinmechanische Komponenten, insbesondere für den Einsatz innerhalb oder nahe am menschlichen Körper und besonders für die prothetische Dentalversorgung, für die Otoplastik oder für andere medizintechnische Produkte und insbesondere Zahnersatzteile wirtschaftlich und in hoher Qualität herzustellen.

Die Aufgabe der Erfindung wird ferner durch ein Drehbearbeitungs-Verfahren, insbesondere Drehfräsverfahren zur Herstellung von Elementen für die prothetische Dentalversorgung, für die Otoplastik oder andere medizintechnische Produkte unter Verwendung eines Fräs- und/oder Schleifwerkzeugs gelöst, wobei das Fräs- und/oder Schleifwerkzeug ein erfindungsgemäßes Fräs- und/oder Schleifwerkzeug sein kann. Das erfindungsgemäße Verfahren kann insbesondere mit einem Drehbearbeitungssystem, insbesondere einem Drehfrässystem umfassend eine Drehspindel und eine Frässpindel mit einem Fräs- und/oder Schleifwerkzeug gemäß der Erfindung durchgeführt werden.

Das erfindungsgemäße Drehbearbeitungs-Verfahren umfasst folgende Schritte:
- Rotieren eines Werkstückrohlings um eine Werkstückdrehachse;
- Rotieren des Fräs- und/oder Schleifwerkzeugs um eine Werkzeugdrehachse;
- Einfahren des rotierenden Fräs- und/oder Schleifwerkzeugs in den rotierenden Werkstückrohling zur spanenden Abnahme von Werkstückmaterial;
- Bearbeiten des rotierenden Werkstückrohlings in einem Bearbeitungsschritt durch spanende Abnahme von Werkstückmaterial in einem ersten Bearbeitungsvorgang und in einem zweiten Bearbeitungsvorgang, wobei der Werkstückrohling in dem ersten Bearbeitungsvorgang im Umfang eines ersten Zeitspanvolumens bearbeitet wird und in dem zweiten Bearbeitungsvorgang im Umfang eines zweiten Zeitspanvolumens bearbeitet wird, wobei das erste Zeitspanvolumen größer ist als das zweite Zeitspanvolumen und wobei der erste Bearbeitungsvorgang und der zweite Bearbeitungsvorgang wenigstens teilweise, insbesondere überwiegend, vorzugsweise im Wesentlichen vollständig, gleichzeitig ablaufen;
- Ausfahren des rotierenden Dentalfräsers aus dem rotierenden Werkstück.

Mit dem erfindungsgemäßen Verfahren ist es möglich, aus einem Werkstückrohling in einem einzigen, kontinuierlichen und ohne Unterbrechung des Fräsvorgangs durchgeführten Bearbeitungsschritt ein fertiges Werkstück beispielsweise in Form eines Zahnersatzteils herzustellen. In diesem Bearbeitungsschritt, also Fräs- und/oder Schleifschritt sind ein erster Bearbeitungsvorgang enthalten, in der eine Schruppbearbeitung des Werkstückrohlings durchgeführt wird und eine zweiter Bearbeitungsvorgang, in dem eine Schlichtbearbeitung durchgeführt wird. Dabei wird das Fräs- und/oder Schleifwerkzeugs zur spanenden Abnahme von Werkstückmaterial in den Werkstückrohling eingefahren und der Werkstückrohling mit einem Bereich des Fräs- und/oder Schleifwerkzeugs bearbeitet, der das erste Zeitspanvolumen abtragen kann und, vorzugsweise gleichzeitig, mit einem anderen Bereich des Fräs- und/oder Schleifwerkzeugs bearbeitet, der das zweite Zeitspanvolumen abtragen kann. Der das erste Zeitspanvolumen abtragende Bereich kann dabei der sich in Richtung auf den Stirnbereich hin verjüngende, insbesondere konisch geformte, Abschnitt des, insbesondere erfindungsgemäßen, Fräs- und/oder Schleifwerkzeugs sein und der das zweite Zeitspanvolumen abtragende Bereich kann dabei der Stirnbereich des, insbesondere erfindungsgemäßen, Fräs- und/oder Schleifwerkzeugs sein.

Erster und zweiter Bearbeitungsvorgang sind auf diese Weise gleichzeitig durchführbar, was eine wesentliche Reduzierung der Gesamtbearbeitungsdauer des Werkstücks ermöglicht. Es ist ferner möglich, dass während des gesamten Bearbeitungsschritts, das Fräs- und/oder Schleifwerkzeug in bearbeitendem Eingriff mit dem Werkstückrohling ist.

Eine vorteilhafte Ausgestaltung umfasst ferner, dass dem erste Bearbeitungsvorgang, insbesondere ausschließlich, von dem sich verjüngendem Abschnitt ausgeführt wird,
und/oder
dass der zweite Bearbeitungsvorgang, insbesondere ausschließlich, von dem teilweise kugelförmig ausgebildeten Stirnbereich des Fräs- und/oder Schleifwerkzeugs ausgeführt wird.

Somit wird in dem ersten Bearbeitungsvorgang eine Schruppbearbeitung mit einem speziell für diese Aufgabe ausgelegten Bereich des Werkzeugs, nämlich dem sich verjüngenden, insbesondere konisch geformten, Bereich, durchgeführt und in dem zweiten Bearbeitungsvorgang wird eine Schlichtbearbeitung mit einem anderen, speziell für die Schlichtbearbeitung ausgelegten Bereich des Werkzeugs durchgeführt. Insbesondere in dieser Ausführungsform des Verfahrens kann das Fräs- und/oder Schleifwerkzeug während des gesamten Bearbeitungsschritts in bearbeitendem Eingriff mit dem Werkstückrohling sein

Darüber hinaus kann es vorteilhaft sein, wenn beim Einfahren des rotierenden Fräs- und/oder Schleifwerkzeugs in den rotierenden Werkstückrohling zuerst der erste Bearbeitungsvorgang beginnt und, insbesondere unmittelbar, nachfolgend der zweite Bearbeitungsvorgang beginnt,
und/oder
dass vor dem oder beim Ausfahren aus dem rotierenden Werkstück der erste Bearbeitungsvorgang endet und, insbesondere unmittelbar, nachfolgend der zweite Bearbeitungsvorgang endet.

Dies kann beispielsweise dadurch erreicht werden, indem das Werkzeug nicht entlang seiner Längsachse auf das Werkstück hin zugestellt wird, sondern in seitlicher Richtung. So kann beim Einfahren beispielsweise der sich verjüngende Abschnitt des Werkzeugs vor dem Stirnbereich in Eingriff mit dem Werkstück kommen und dem Stirnbereich vorauseilend eine Schruppbearbeitung durchführen.

Weiterhin kann es vorteilhaft sein, das Verfahren so auszubilden, dass die Werkzeugdrehachse beim Einfahren in den Werkstückrohling und/oder beim Bearbeiten des Werkstückrohlings und/oder beim Ausfahren aus dem Werkstück die Werkstückdrehachse schneidet,
oder
dass die Werkzeugdrehachse beim Einfahren in den Werkstückrohling und/oder beim Bearbeiten des Werkstückrohlings und/oder beim Ausfahren aus dem Werkstück relativ zur Werkstückdrehachse versetzt orientiert ist,
   oder
dass die Werkzeugdrehachse beim Einfahren in den Werkstückrohling und/oder beim Bearbeiten des Werkstückrohlings in einer ersten Einfahrphase relativ zur Werkstückdrehachse versetzt gefahren wird und in einer zweiten Einfahrphase in schneidender Orientierung mit der Werkstückdrehachse gefahren wird und/oder dass beim Ausfahren aus dem Werkstück in einer ersten Ausfahrphase die Werkzeugdrehachse die Werkstückdrehachse schneidend orientiert ist und in einer zweiten Ausfahrphase die Werkzeugdrehachse in eine relativ zur Werkstückdrehachse versetzte Orientierung gefahren wird.

Für die Bearbeitungsqualität ist es sehr bedeutsam in welcher Weise das Fräs- und/oder Schleifwerkzeug und insbesondere ein Dentalfräser in Kontakt mit dem Werkstückrohling gebracht oder gefahren wird, bzw. von diesem weggebracht oder gefahren wird. Die vorteilhaften Ein-, beziehungsweise Ausfahrstrategien vermeiden hohe schlagartige Belastungen des Fräs- und/oder Schleifwerkzeug beim Erstkontakt mit dem Werkstückrohling und Erhöhen somit die Qualität und Vermindern zugleich die Belastung des Fräs- und/oder Schleifwerkzeug, was dessen Standzeit erhöht.

Ferner kann es vorteilhaft sein, wenn die Werkzeugdrehachse beim Einfahren in den Werkstückrohling und/oder beim Bearbeiten des Werkstückrohlings und/oder beim Ausfahren aus dem Werkstück senkrecht zu der Werkstückdrehachse angeordnet ist;
oder
dass die Werkzeugdrehachse beim Einfahren in den Werkstückrohling und/oder beim Ausfahren aus dem Werkstück und/oder während der Bearbeitung des Werkstückrohlings in einem Voreilwinkel, insbesondere relativ zu der Werkstückdrehachse, angeordnet ist.

Eine senkrecht zur Werkstückdrehachse stehende Werkzeugdrehachse beim Einfahren des Dentalfräsers ermöglicht eine günstige Einleitung der Schneidkraft in den Werkstückrohling. Die Einstellung des Dentalfräsers in einem Voreilwinkel ermöglicht eine Erhöhung der Schnittleistung.

Außerdem kann es vorteilhaft sein, wenn das Werkstück mit einer Drehzahl n von 10 min⁻¹ bis 200 min⁻¹ rotiert, insbesondere mit einer Drehzahl n von 100 min⁻¹ bis 160 min⁻¹, vorzugsweise mit einer Drehzahl n von 120 min⁻¹.

Auf diese Weise kann ein günstiges Verhältnis von Werkstückdrehzahl zu Schnittgeschwindigkeit des Dentalfräsers am Werkstückrohling realisiert werden.

Ferner vorteilhaft kann es sein, wenn wenigstens ein begrenzter Oberflächenbereich des Werkstücks nach dem Ausfahren des rotierenden Fräs- und/oder Schleifwerkzeugs aus dem rotierenden Werkstück einen Mittenrauhwert Rₐ von weniger als 0,3µm, insbesondere von weniger als 0,2µm, vorzugsweise von weniger als 0,18µm oder 0,1µm aufweist.

Auf diese Weise kann in einem Bearbeitungsschritt ein Werkstück hergestellt werden, das eine sehr geringe Oberflächenrauhigkeit aufweist. Es ist ebenfalls möglich, das Werkstück nach der Beendigung des erfindungsgemäßen Verfahrens noch weiter zu bearbeiten, beispielsweise durch einen Polierschritt oder einen Frässchritt mit einem Fräser mit teilweise kugelförmigen Stirnbereich mit geringerem Radius.

Vorteilhafte Ausgestaltungen und Weiterbildungen gemäß der Erfindung ergeben sich aus den jeweils abhängigen Patentansprüchen und auch aus der nachfolgenden Beschreibung.

Die Erfindung wird im Folgenden anhand von Ausführungsbeispielen unter Bezugnahme auf die Zeichnungen weiter erläutert. Es zeigen jeweils in einer schematischen Darstellung:
- FIG 1: zeigt eine Seitenansicht eines Dentalfräsers gemäß einer Ausführungsform der Erfindung;
- FIG 2: zeigt eine Seitenansicht eines Dentalschleifstifts gemäß einer alternativen Ausführungsform der Erfindung;
- FIG 3: zeigt eine perspektivische Ansicht eines Drehbearbeitungssystems für die Herstellung von Zahnersatzteilen;
- FIG 4: zeigt eine Seitenansicht des Drehbearbeitungssystems der Figur 3;
- FIG 5: zeigt eine perspektivische Ansicht eines Dentalfräsers gemäß einer Ausführungsform der Erfindung;
- FIG 6: zeigt eine perspektivische Ansicht eines mit dem erfindungsgemäßen Werkzeug oder dem erfindungsgemäßen Verfahren herstellbaren Abutments;

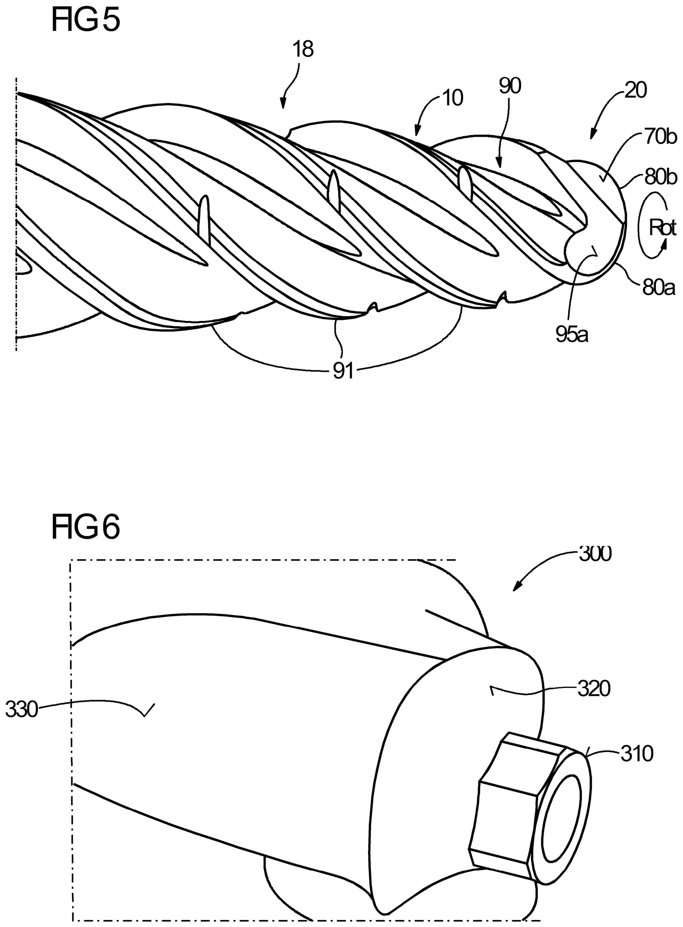

Die Figuren 5 und 6 zeigen jeweils schematische Abbildungen, die nicht dazu geeignet sind Größen oder Dimensionen durch Messung zu entnehmen.

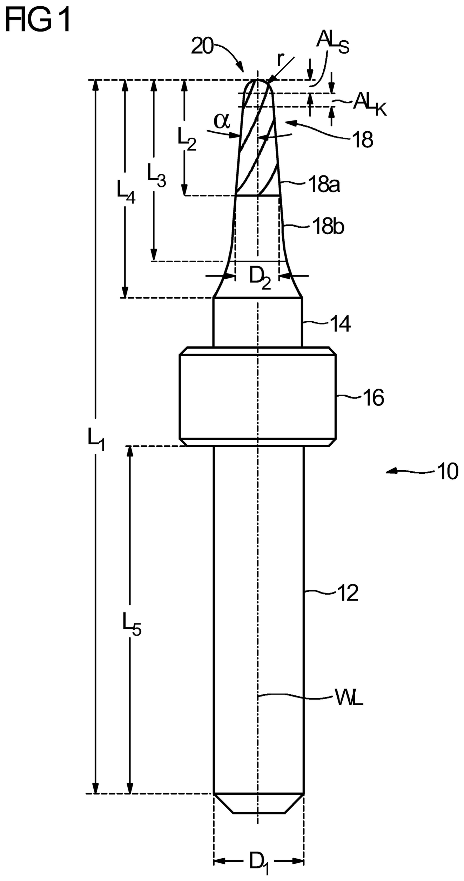

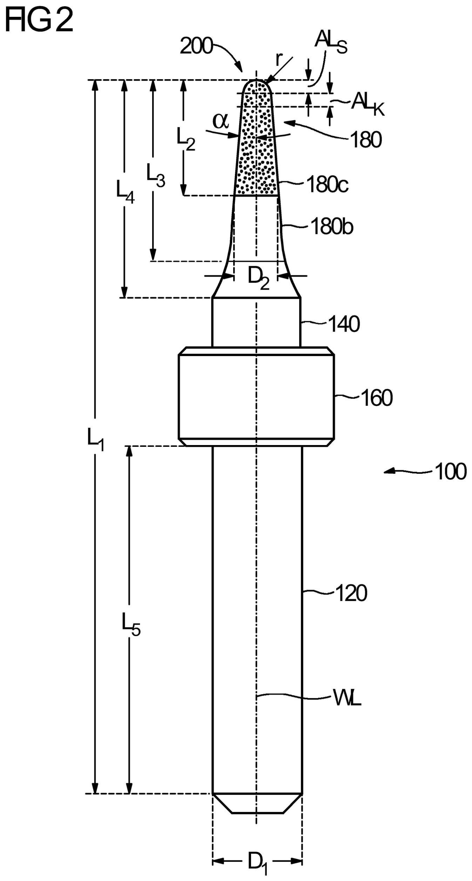

FIG 1 zeigt einen als Schaftfräser ausgebildeten Dentalfräser 10 mit einen Schaft 12 und einen Arbeitsteil 14. Der Arbeitsteil 14 weist einen konisch geformten Abschnitt 18 auf, der an einem vorderen Ende einen teilweise kugelförmig ausgebildeten Stirnbereich 20 aufweist. Genauer gesagt geht die Konusform des konisch geformten Abschnitts unmittelbar in eine teilweise Kugelform über und bildet dadurch den stirnseitigen Abschluss des Dentalfräsers 10, der damit eine teilweise kugelförmige Stirnseite 20 aufweist. In den gezeigten Ausführungsformen der Figuren 1 und 2 geht der konisch geformte Abschnitt 18 so in den teilweise kugelförmig ausgebildeten Stirnbereich 20 übergeht, dass ein im Wesentlichen weniger als halbkugelförmig ausgebildeter Stirnbereich bereitgestellt ist.

Es sind dazu alternative Ausführungsformen möglich, bei denen anstelle des dargestellten konisch geformten Abschnitts 18 ein sich in anderer Weise verjüngender Abschnitt ausgebildet ist, bei dem keine oder zumindest keine ausschließliche Konusform vorliegt. Bei solchen Ausführungsformen ist es möglich, dass der sich verjüngende Abschnitt so in den teilweise kugelförmig ausgebildeten Stirnbereich 20 übergeht, dass ein im Wesentlichen genau halbkugelförmig ausgebildeter Stirnbereich 20 bereitgestellt ist oder dass der sich verjüngende Abschnitt so in den teilweise kugelförmig ausgebildeten Stirnbereich 20 übergeht, dass ein im Wesentlichen mehr als halbkugelförmig ausgebildeter Stirnbereich 20 bereitgestellt ist.

Der konisch geformte Abschnitt 18 weist dabei einen Bereich 18a mit gedrallt um eine Werkzeuglängsachse WL des Dentalfräsers 10 umlaufenden Schneiden auf. Die Schneiden sind dabei durchgehenden oder unterbrechungsfrei ausgebildet, das heißt die Schneiden weisen keine Unterbrechungsstellen oder Kerben und insbesondere keine Querhiebe auf. Die Schneiden weisen dabei eine Schneidenlänge L₂ von beispielsweise 8mm auf.

An den Schneidenbereich 18a des konischen Abschnitts schließt sich unmittelbar ein schneidenloser Bereich 18b an. Die gesamte Länge des konischen Abschnitts, die sogenannte freie Halslänge L₃, umfasst die Schneidenlänge L₂ sowie die Länge des schneidenlosen Bereichs 18b und kann beispielsweise 10mm betragen.

Der sich an den Schaft 12 anschließende vordere Bereich des Schaftfräsers 10 weist eine Schaftanschlusslänge L₄ auf, die beispielsweise 15mm betragen kann.

Die freie Halslänge L₃ kann zu der Schneidenlänge L₂ ein Verhältnis von 2:1 bis 1, insbesondere von 3:2, 4:3, 5:4, 6:5 oder 7:6, aufweisen. Insbesondere kann die Schneidenlänge L₂ 8mm betragen.

Der Stirnbereich 20 weist dabei eine Anzahl N₁ Schneiden auf, der konisch geformte Abschnitt 18 weist eine Anzahl N₂ Schneiden auf. Die Anzahl N₁ der Schneiden des Stirnbereichs 20 kann genauso groß sein wie die Anzahl N₂ der Schneiden des Abschnitts 18, ebenso ist es möglich, dass der Stirnbereich 20 eine geringere Anzahl N₁ an Schneiden aufweist wie der Abschnitt 18. Beispielsweise kann der Stirnbereich eine Anzahl N₁ von 2 bis 4 Schneiden aufweisen und der Abschnitts 18 eine Anzahl N₂ von 3 bis 6 Schneiden. Für manche Anwendungen ist eine Anzahl N₁ von 2 und eine Anzahl N₂ von 4 entsprechend dem gezeigten Ausführungsbeispiel vorteilhaft.

Die Schneiden des konisch geformten Abschnitts 18 sind dabei gedrallt um die Werkzeuglängsachse WL des Dentalfräsers umlaufend und durchgehend ausgebildet. In dem gezeigten Ausführungsbeispiel ist ein Drallwinkel oder Spiralwinkel der Schneiden von 45° vorgesehen. Die Drall- oder Spiralrichtung ist dabei nach rechts vorgesehen, entsprechend ist der Dentalfräser für eine Schneidrichtung nach rechts ausgebildet.

Zudem sind die Schneiden gleich geteilt, d.h. der Abstand der Schneiden in Umfangsrichtung des Werkzeugs ist jeweils gleich.

Der Schaft des Dentalfräsers kann ein Hartmetall umfassen oder aus Hartmetall bestehen, der Arbeitsteil 14 und/oder die Schneiden können mit einer TiAlN (Titaniumaluminiumnitrid)-Beschichtung versehen sein.

Ferner kann der konisch geformte Abschnitt 18 einen Konuswinkel α von 2° bis 7°, insbesondere von 3° bis 6°, relativ zu der Werkzeuglängsachse WL des Dentalfräsers aufweisen. In dem gezeigten Ausführungsbeispiel weist der konisch geformte Abschnitt 18 einen Konuswinkel von 5° auf. Zudem kann der konisch geformte Abschnitt 18 einen Konusbasisdurchmesser D₂ von 2,3mm bis 3,8mm, insbesondere von 2,8mm bis 3,3mm, vorzugsweise von 3,0mm, aufweisen. In dem gezeigten Ausführungsbeispiel liegt der Konusbasisdurchmesser D₂ bei 3,033mm.

Der teilweise kugelförmig ausgebildete Stirnbereich 20 kann einen Kugelradius r von 0,5mm bis 1,2mm, insbesondere von 0,6mm bis 0,9mm, aufweisen. Das gezeigte Ausführungsbeispiel weist einen Kugelradius r von 0,7mm auf.

Der Schaft 12 weist einen Schaftdurchmesser D₁ von 6mm und eine Schaftlänge von 25mm auf. Die Gesamtlänge des Dentalfräsers 10 kann beispielsweise 50mm betragen. Zur Vereinfachung des automatischen Werkzeugwechsels ist an dem Dentalfräser ein Anschlagring 16 vorgesehen.

FIG 2 zeigt eine alternative Ausführungsform mit einem als Schaftwerkzeug ausgebildeten Schleifwerkzeug, genauer einen Schleifstift 100. Der Schleifstift 100 weist im Wesentlichen die gleiche Form und Dimensionierung auf wie der Dentalfräser 10. Allerdings weist der Schleifstift 100 im Schneidenbereich 180a und im Stirnbereich 200 anstelle von geometrisch bestimmten, gedrallten Schneiden Schleifmittel auf, die geometrisch unbestimmte Schneiden aufweisen oder repräsentieren, beispielswiese in Form von Diamantkörnern, die über eine Trägermatrix oder in anderer geeigneter Weise mit dem Arbeitsteil 14 des Schleifstifts verbunden sind.

Nicht dargestellte Ausführungsformen umfassen ein kombinierte Fräs- und Schleifwerkzeug, das beispielsweise im Schneidenbereich 18a, 180a gedrallt um die Werkzeuglängsachse WL des Dentalfräsers umlaufende geometrisch bestimmte Schneiden aufweist und im Stirnbereich 20, 200 Schleifmittel mit einer definierten Körnung, also geometrisch unbestimmte Schneiden. Ebenso ist es denkbar, dass im Schneidenbereich 18a, 180a Schleifmittel vorgesehen sind und im Stirnbereich 20, 200 geometrisch bestimmte Schneiden.

Ferner ist in den Figuren 1 und 2 erkennbar, dass ein Teilbereich des konisch geformten Abschnitts 18 sich über eine erste axiale Länge AL_{K} erstreckt. Dieser Teilbereich ist so ausgebildet, dass mit diesem ein erstes Zeitspanvolumen ZSV₁ abgetragen werden kann. Zudem erstreckt sich der Stirnbereich 20 über eine zweite axiale Länge ALs, die genauso lang ist wie die erste axiale Länge AL_{K}. Der Stirnbereich 20 ist so ausgebildet ist, dass er ein zweites Zeitspanvolumen ZSV₂ abtragen kann. Wenn der eben genannte Teilbereich des konisch geformten Abschnitts 18 und der Stirnbereich 20 gleichzeitig in spanendem Eingriff mit dem Werkstück sind, rotieren beide Bereiche mit der gleichen Drehzahl n_{F}. Der Teilbereich des konisch geformten Abschnitts 18 trägt im selben Zeitraum in höheres Spanvolumen ab als der Stirnbereich 20. Dadurch kann der konisch geformte Bereich 18 eine Schruppbearbeitung durchführen und gleichzeitig kann der Stirnbereich 20 eine Schlichtbearbeitung durchführen.

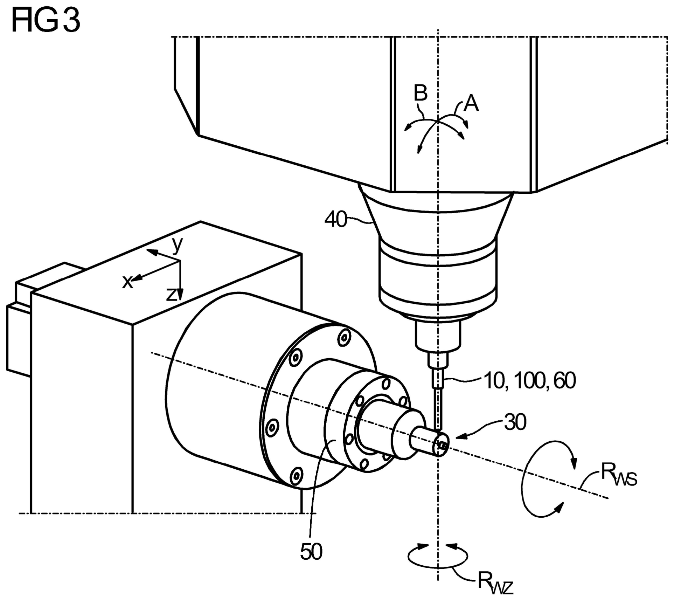

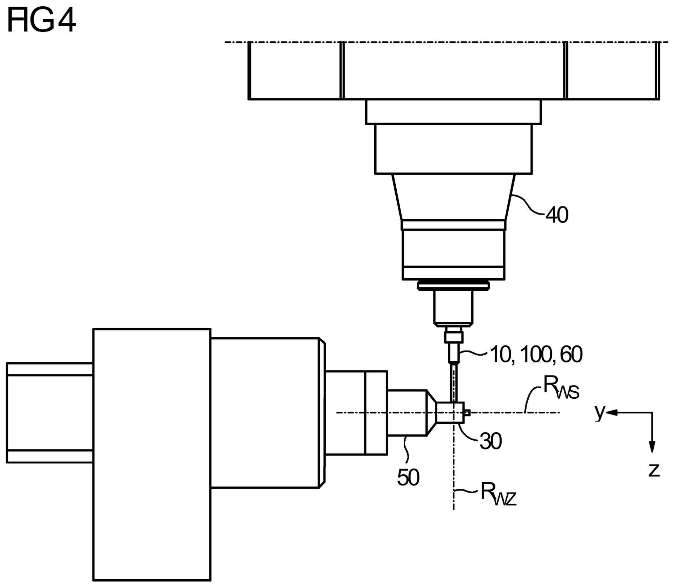

Die Figuren 3 und 4 zeigen eine perspektivische Ansicht und eine Seitenansicht eines Drehfrässystems für die Herstellung von Zahnersatzteilen. Der in den Figuren 3 und 4 dargestellte Fräser 60 entspricht einem beispielhaften Fräser. Das beschriebene Drehfrässystem kann zudem vorteilhaft mit einem erfindungsgemäßen Dentalfräser ausgestattet sein, so dass der Fräser 60 durch einen Dentalfräser 10 oder einen Schleifstift 100 ersetzbar ist.

Das Drehfrässystem umfasst eine Frässpindel 40 und eine Drehspindel 50, die zueinander orthogonal angeordnet sind. In die Drehspindel 50 ist ein Werkstück 30 in Form eines Rohlings eingespannt, so dass das Werkstück 30 von der Drehspindel 50 um eine Werkstückdrehachse RWS rotierbar ist. Aus dem Werkstückrohling soll ein Werkstück 30 mit vordefinieren Endmaßen, genauer gesagt ein sogenanntes Abutment hergestellt werden. Abutments werden üblicherweise als Verbindungsteile zwischen einem Zahnimplantat, beispielsweise einem Zahnwurzelersatz und der prothetischen Versorgung, beispielsweise den sichtbaren Zahnkronen, bezeichnet. Abutments werden üblicherweise aus Titan, Aluminiumoxidkeramik oder aus Zirkondioxidkeramik hergestellt.

Der Fräser 60 ist in der Frässpindel 40 aufgenommen, so dass der Fräser 10um eine Werkzeugdrehachse R_{WZ} rotierbar ist. Die Drehrichtungen von Werkstück 30 und Fräser 10 können dabei entgegengesetzt sein.

Beispielsweise bei Verwendung des Fräsers 10 aus Figur 1, der eine Rechtsdrehung als vorbestimmte Schneidrichtung aufweist, wird die Frässpindel 40 rechtsdrehend betrieben, während die Drehspindel 50 linksdrehend betrieben wird. Auf diese Weise wird der Werkstückrohling in den rotierenden Fräser 10 "hinein" rotiert, es wird somit eine spanabhebende Bearbeitung im Gegenlauf durchgeführt.

Die Werkstückdrehachse Rws ist dabei parallel zu einer y-Achse eines kartesischen Koordinatensystems orientiert oder fällt, wie in der in den Figuren 3 und 4 dargestellten Situation, mit der y-Achse zusammen. Die Werkzeugdrehachse Rwz ist parallel zu einer z-Achse des kartesischen Koordinatensystems oder fällt, wie in der in den Figuren 3 und 4 dargestellten Situation, mit der z-Achse zusammen.

Werkstückdrehachse Rws und Werkzeugdrehachse Rwz sind orthogonal zueinander angeordnet dargestellt, wobei die Frässpindel 40 zusätzlich um zwei rotatorische Achsen A, B um die z-Achse herum schwenkbar ist und die Frässpindel 40 selbst um die y-Achse rotiert werden kann. Die Drehspindel 50 ermöglicht außerdem eine Zustellung des Werkstücks 30 in Richtung der y-Achse.

Das so ausgestaltete Drehfrässystem ermöglicht ein Drehfräsverfahren, bei dem ein Werkstückrohling ähnlich wie in einem Drehprozess um die Werkstückdrehachse Rws rotiert. Der rotierende Werkstückrohling 30 wird von dem um seine Werkzeugdrehachse Rwz rotierenden Fräser60 spanend bearbeitet, wozu der rotierende Fräser60 in den rotierenden Werkstückrohling 30 zur spanenden Abnahme von Werkstückmaterial entlang einer definierten Einfahrbahn einfährt.

In dem dargestellten Ausführungsbeispiel schneidet beim Einfahren in den Werkstückrohling 30 oder auch beim Ausfahren aus dem Werkstück die Werkstückdrehachse R_{WS} die Werkzeugdrehachse R_{WZ} die Werkstückdrehachse R_{WS}. Genauer gesagt ist zu diesem Zweck der Fräser 10, 60 so angeordnet, dass die Werkzeugdrehachse R_{WZ} die Werkstückdrehachse R_{WS} schneidet. In dieser Anordnung kann der Fräser 10, 60 entlang der Werkstückdrehachse R_{WS}, bzw, entlang der y-Achse in das Werkstück 30 hineingefahren werden.

Alternativ kann mit dem Drehfrässystem die Werkzeugdrehachse Rwz beim Einfahren in den Werkstückrohling und/oder beim Ausfahren aus dem Werkstück relativ zur Werkstückdrehachse Rws versetzt orientiert sein.

Ebenso ist eine variable Einstellung möglich, so dass die Werkzeugdrehachse R_{WZ} beim Einfahren in den Werkstückrohling in einer ersten Einfahrphase relativ zur Werkstückdrehachse Rws versetzt gefahren wird und in einer zweiten Einfahrphase in schneidender Orientierung mit der Werkstückdrehachse R_{WS} gefahren wird, bzw. dass die Werkzeugdrehachse Rwz beim Ausfahren aus dem Werkstück in einer ersten Ausfahrphase die Werkstückdrehachse R_{WS} schneidend gefahren wird und in einer zweiten Ausfahrphase in eine relativ zur Werkstückdrehachse R_{WS} versetzte Orientierung gefahren wird.

Durch die spezielle Formgebung des Fräsers 10 oder des Schleifstifts 100 ist es möglich, dass in einem ersten Bearbeitungsvorgang der konisch geformte Abschnitt 18 den rotierenden Werkstückrohling 30 mit einem ersten Zeitspanvolumen ZSV₁ bearbeitet und der Stirnbereich 20 in einem zweiten Bearbeitungsvorgang den rotierenden Werkstückrohling 30 mit einem zweiten Zeitspanvolumen ZSV₂ bearbeitet. Erster und zweiter Bearbeitungsvorgang können durch die besondere Ausgestaltung des Fräsers 10 oder des Schleifstifts 100 gleichzeitig durchgeführt werden.

Ferner ist in dem in Figur 3 und 4 dargestellten Ausführungsbeispiel die Werkzeugdrehachse R_{WZ} beim Einfahren in den Werkstückrohling 30 oder auch beim Ausfahren aus dem fertig bearbeiteten Werkstück senkrecht zu der Werkstückdrehachse R_{WS} angeordnet. Alternativ kann die Werkzeugdrehachse R_{WZ} beim Einfahren in den Werkstückrohling 30 oder auch beim Ausfahren aus dem Werkstück oder während der Bearbeitung des Werkstückrohlings 30 in einem Voreilwinkel, insbesondere relativ zu der Werkstückdrehachse R_{WS}, angeordnet sein. Als Voreilwinkel wird dabei der Winkel bezeichnet, um den der Fräser 10, 60 in Verfahrrichtung geneigt ist. Der Voreilwinkel kann dabei kleiner als 90° gewählt werden. Genauer gesagt, bezeichnet der Voreilwinkel den Winkel zwischen der Flächennormalen der bearbeiteten Fläche und der Werkzeugorientierung, in Richtung der Bahntangente des Verfahrwegs des Werkzeugs.

Der Voreilwinkel dient dazu, um das Werkzeug in einem festen Anstellwinkel zur Bearbeitungsebene zu orientieren. Damit kann die Schnittleistung erhöht werden. Beispielsweise berührt ein Kugelfräser bei senkrechter Ausrichtung genau mit der Werkzeugspitze die zu bearbeitende Fläche. An dieser Stelle des Fräsers ist aber die Rotations- und damit auch die Schnittgeschwindigkeit=0.

Das Werkstück 30 wird von der Drehspindel 50 mit einer Drehzahl n von 10 min⁻¹ bis 200 min⁻¹ rotiert, insbesondere mit einer Drehzahl n von 100 min⁻¹ bis 160 min⁻¹, vorzugsweise mit einer Drehzahl n von 120 min⁻¹.

Mit dem beschriebenen Drehbearbeitungsverfahren und insbesondere dem Drehfräsverfahren können Werkstücke, beispielsweise Abutments, mit Durchmessern von typischerweise 2mm bis 10mm bearbeitet werden. Bei der Bearbeitung unrunder Werkstücke kann das Fräs- und/oder Schleifwerkzeug beispielsweise in z-Richtung so nachgestellt werden, dass die Schruppbearbeitung durch den sich verjüngenden Abschnitt 18, 180 vorlaufend erfolgt und die Schlichtbearbeitung durch den Stirnbereich 20, 200 nachlaufend. Alternativ oder zusätzlich ist es möglich, dass das Fräs- und/oder Schleifwerkzeug in einem solchen Winkel zur Werkstückoberfläche gestellt oder geführt wird, dass die Schruppbearbeitung durch den sich verjüngenden Abschnitt 18, 180 und die Schlichtbearbeitung durch den Stirnbereich 20, 200 erfolgt.

FIG 5 zeigt eine perspektivische Ansicht des Dentalfräsers 10 mit einem teilweise kugelförmig ausgebildeten Stirnbereich 20, der zwei Stirnschneiden 80a, 80b aufweist. In der dargestellten Ansicht sind eine der Stirnschneide 80b zuzuordnende Spanfläche 70b und eine der Stirnschneide 80a zuzuordnende Freifläche 95a erkennbar. Auf der vom Betrachter abgewandten Seite des Stirnbereichs 20 sind jeweils eine weitere Spanfläche und eine weitere Freifläche vorgesehen. In den spiralförmigen Nuten zwischen den Schneiden 91 des konisch geformten Abschnitts 18 sind Spanräume 90 definiert.

Es kann vorteilhaft sein, wenn wenigstens ein begrenzter Oberflächenbereich des Fräs- und/oder Schleifwerkzeugs, insbesondere ein begrenzter Oberflächenbereich des Stirnbereichs 20, vorzugsweise ein Teilbereich einer Stirnschneide 80a, 80b oder einer Spanfläche 70b des Stirnbereichs 20 oder eine Freifläche 95a des Stirnbereichs 20 auch eine Spanfläche oder Freifläche des sich verjüngenden Abschnitts 18 einen Mittenrauhwert Rₐ von weniger als 0,4µm oder von weniger als 0,35µm aufweist.

Ebenso kann es vorteilhaft sein, wenn wenigstens ein begrenzter Oberflächenbereich des Fräs- und/oder Schleifwerkzeugs, insbesondere ein begrenzter Oberflächenbereich des Stirnbereichs 20, vorzugsweise ein Teilbereich einer Stirnschneide 80a, 80b oder einer Spanfläche 70b des Stirnbereichs 20 oder eine Freifläche 95a des Stirnbereichs 20 auch eine Spanfläche oder Freifläche des sich verjüngenden Abschnitts 18, eine gemittelte Rautiefe Rz von weniger als 3,0µm, vorzugsweise von weniger als 2,5µm oder 2,4µm aufweist.

FIG 6 zeigt eine perspektivische Ansicht eines mit dem erfindungsgemäßen Werkzeug oder dem erfindungsgemäßen Verfahren herstellbaren Abutments 300.

Es kann vorteilhaft sein, wenn wenigstens ein begrenzter Oberflächenbereich des Werkstücks, beispielsweise ein begrenzter Flächenbereich oder ein vollständiger Handhabungsflächenbereich, wie zum Beispiel eine als Mehrkantfläche ausgebildete Fläche zur Verdrehsicherung 310, eine Frontfläche 320 oder eine Seitenfläche 330 des Abutments 300 nach dem Ausfahren des rotierenden Fräs- und/oder Schleifwerkzeugs aus dem rotierenden Werkstück einen arithmetischen Mittenrauhwert Rₐ von weniger als 0,3µm, insbesondere von weniger als 0,2µm, vorzugsweise von weniger als 0,18µm oder 0,1µm aufweist.

Ebenso kann es vorteilhaft sein, wenn wenigstens ein begrenzter Oberflächenbereich des Werkstücks, beispielsweise ein begrenzter Flächenbereich oder ein vollständiger Handhabungsflächenbereich, wie zum Beispiel eine Fläche zur Verdrehsicherung 310, eine Frontfläche 320 oder eine Seitenfläche 330 des Abutments 300 nach dem Ausfahren des rotierenden Fräs- und/oder Schleifwerkzeugs aus dem rotierenden Werkstück eine gemittelte Rautiefe R_{Z} von weniger als 1µm, insbesondere von weniger als 0,9µm, vorzugsweise von weniger als 0,7µm oder 0,6µm oder 0,5µm aufweist.

Auf diese Weise kann in einem Bearbeitungsschritt ein Werkstück hergestellt werden, das eine sehr geringe Oberflächenrauhigkeit aufweist. Es ist ebenfalls möglich, das Werkstück nach der Beendigung des erfindungsgemäßen Verfahrens noch weiter zu bearbeiten, beispielsweise durch einen Polierschritt oder einen Frässchritt mit einem Fräser mit teilweise kugelförmigen Stirnbereich mit geringerem Radius.

### Bezugszeichenliste

- 10: Dentalfräser
- 100: Dentalschleifwerkzeug
- 12, 120: Schaft
- 14, 140: Arbeitsteil
- 16, 160: Anschlagring
- 18, 180: konischer Abschnitt
- 18a, 180a: Schneidenbereich
- 18b, 180b: schneidenloser Bereich
- 20, 200: Stirnbereich

- 30, 300: Werkstück
- 40: Frässpindel
- 50: Drehspindel
- 60: Fräser
- 70b: Spanfläche
- 80a, 80b: Stirnschneiden
- 90: Spanraum
- 91: Schneiden des konischen Abschnitts
- 95a: Freifläche

- 300: Werkstück
- 310: Fläche zur Verdrehsicherung
- 320: Frontfläche
- 330: Seitenfläche

- L₁: Gesamtlänge
- L₂: Schneidenlänge
- L₃: freie Halslänge
- L₄: Schaftanschlusslänge
- L₅: Schaftlänge
- D₁: Schaftdurchmesser
- D₂: Konusbasisdurchmesser
- r: Kugelradius

- WL: Werkzeuglängsachse
- α: Konuswinkel

- Rwz: Drehachse des Werkzeugs
- Rws: Drehachse des Werkstücks
- Rot: Rotationsrichtung des Werkzeugs
- n_{F}: Drehzahl des Fräsers
- x,y,z: lineare Achsen
- A, B: rotatorische Achsen
- Rₐ: arithmetischer Mittenrauwert
- R_{Z}: gemittelte Rautiefe

- AL_{K}: erste axiale Länge
- AL_{S}: zweite axiale Länge

## Patentansprüche

1. Fräs- und/oder Schleifwerkzeug, insbesondere Dentalfräs- oder Dentalschleifwerkzeug (10, 100), umfassend einen Schaft (12, 120, 140) und einen Arbeitsteil (14, 140), wobei der Arbeitsteil (14, 140) wenigstens einen teilweise kugelförmig ausgebildeten Stirnbereich (20, 200) und einen sich in Richtung auf den Stirnbereich (20, 200) hin verjüngenden, insbesondere konisch geformten, Abschnitt (18, 180) aufweist, wobei der Stirnbereich (20, 200) geometrisch bestimmte und/oder geometrisch unbestimmte Schneiden umfasst (80a, 80b, 91) und wobei der Arbeitsteil (14, 140), insbesondere der sich verjüngende Abschnitt (18, 180), einen ersten Bereich (18a, 180a) mit geometrisch bestimmte und/oder geometrisch unbestimmte Schneiden (80a, 80b, 91) und wenigstens einen zweiten, schneidenlosen Bereich (18b, 180b)) umfasst, wobei der sich verjüngende Abschnitt (18, 180) so ausgebildet ist, dass er ein erstes Zeitspanvolumen (ZSV₁) abtragen kann, wobei der Stirnbereich (20, 200) so ausgebildet ist, dass er ein zweites Zeitspanvolumen (ZSV₂) abtragen kann und wobei das erste Zeitspanvolumen (ZSV₁) bei gleicher Drehzahl (n_{F}) des Fräs- und/oder Schleifwerkzeugs größer ist als das zweite Zeitspanvolumen (ZSV₂).

2. Fräs- und/oder Schleifwerkzeug nach Anspruch 1, **dadurch gekennzeichnet, dass** ein sich über eine erste axiale Länge (AL_{K}) erstreckender Teilbereich des sich verjüngenden Abschnitts (18, 180) so ausgebildet ist, dass er das erste Zeitspanvolumen (ZSV₁) abtragen kann, und wobei der sich über eine zweite axiale Länge (ALs) erstreckende Stirnbereich (20, 200) so ausgebildet ist, dass er das zweite Zeitspanvolumen (ZSV₂) abtragen kann, wobei die erste axiale Länge (AL_{K}) und die zweite axiale Länge (AL_{S}) gleich lang sind.

3. Fräs- und/oder Schleifwerkzeug nach einem der vorhergehenden Ansprüche, **dadurch gekennzeichnet, dass** der erste Bereich (18a, 180a) geometrisch bestimmte Schneiden (91) umfasst, die gedrallt um eine Werkzeuglängsachse (WL) des Fräs- und/oder Schleifwerkzeugs umlaufend und insbesondere durchgehend, vorzugsweise querhiebfrei, ausgebildet sind,
und/oder
dass der Stirnbereich (20) geometrisch bestimmte Schneiden (80a, 80b) umfasst, insbesondere wobei die geometrisch bestimmten Schneiden (80a, 80b) gedrallt um eine Werkzeuglängsachse (WL) des Fräs- und/oder Schleifwerkzeugs umlaufend und insbesondere durchgehend, vorzugsweise querhiebfrei, ausgebildet sind.

4. Fräs- und/oder Schleifwerkzeug nach einem der vorhergehenden Ansprüche, **dadurch gekennzeichnet, dass** der erste Bereich (18a, 180a) ausschließlich geometrisch unbestimmte Schneiden umfasst,
und/oder
dass der Stirnbereich (20, 200) ausschließlich geometrisch unbestimmte Schneiden umfasst.

5. Fräs- und/oder Schleifwerkzeug nach einem der vorhergehenden Ansprüche, **dadurch gekennzeichnet, dass** der sich verjüngende Abschnitt (18, 180) den zweiten, schneidenlosen, Bereich (18b, 180b) umfasst.

6. Fräs- und/oder Schleifwerkzeugnach einem der vorhergehenden Ansprüche, **dadurch gekennzeichnet, dass** der Stirnbereich (20, 200) eine Anzahl N₁ Schneiden aufweist und dass der sich verjüngende Abschnitt (18, 180) eine Anzahl N₂ Schneiden aufweist, wobei die Anzahl N₁ der Schneiden des Stirnbereichs (20, 200) kleiner ist als die Anzahl N₂ der Schneiden des sich verjüngenden Abschnitts (18, 180).

7. Fräs- und/oder Schleifwerkzeug nach einem der vorhergehenden Ansprüche, **dadurch gekennzeichnet, dass** der sich verjüngende Abschnitt (18, 180) ein konisch geformter Abschnitt (18, 180) ist und einen Konuswinkel (α) von 2° bis 7°, insbesondere von 3° bis 6°, vorzugsweise von 5°, relativ zu der Werkzeuglängsachse (WL) des Fräs- und/oder Schleifwerkzeug aufweist.

8. Fräs- und/oder Schleifwerkzeug nach Anspruch 7, **dadurch gekennzeichnet, dass** der konisch geformte Abschnitt (18, 180) einen Konusbasisdurchmesser (D₂) von 2,3mm bis 3,8mm, insbesondere von 2,8mm bis 3,3mm, vorzugsweise von 3,0mm oder 3,033mm, aufweist.

9. Fräs- und/oder Schleifwerkzeug nach einem der vorhergehenden Ansprüche, **dadurch gekennzeichnet, dass** der teilweise kugelförmig ausgebildete Stirnbereich (20, 200) einen Kugelradius (r) von 0,5mm bis 1,2mm, insbesondere von 0,6mm bis 0,9mm, vorzugsweise von 0,7mm, aufweist.

10. Fräs- und/oder Schleifwerkzeug nach einem der vorhergehenden Ansprüche, **dadurch gekennzeichnet, dass** ein Verhältnis einer freien Halslänge (L₃) des Fräs- und/oder Schleifwerkzeug zu einer Schneidenlänge (L₂) des Fräs-und/oder Schleifwerkzeug von 2:1 bis 1, insbesondere von 3:2, 4:3, 5:4, 6:5 oder 7:6, vorgesehen ist.

11. Fräs- und/oder Schleifwerkzeug nach einem der vorhergehenden Ansprüche, **dadurch gekennzeichnet, dass** wenigstens ein begrenzter Oberflächenbereich des Fräs- und/oder Schleifwerkzeugs, insbesondere ein begrenzter Oberflächenbereich des Stirnbereichs (20, 200), vorzugsweise ein Teilbereich einer Stirnschneide (80a, 80b) oder einer Spanfläche (70b) des Stirnbereichs (20, 200) oder eine Freifläche (95a) des Stirnbereichs (20, 200) oder eine Spanfläche oder eine Freifläche des sich verjüngenden Abschnitts (18, 180) einen Mittenrauhwert (Rₐ) von weniger als 0,4µm oder von weniger als 0,35µm aufweist,
und/oder
dass wenigstens ein begrenzter Oberflächenbereich des Fräs- und/oder Schleifwerkzeugs, insbesondere ein begrenzter Oberflächenbereich des Stirnbereichs (20, 200), vorzugsweise ein Teilbereich einer Stirnschneide (80a, 80b) oder einer Spanfläche (70b) des Stirnbereichs (20, 200) oder einer Freifläche (95a) des Stirnbereichs (20, 200) oder eine Spanfläche oder eine Freifläche des sich verjüngenden Abschnitts (18) eine gemittelte Rautiefe (Rz) von weniger als 3,0µm, vorzugsweise von weniger als 2,5µm oder 2,4µm aufweist.

12. Drehbearbeitungssystem, insbesondere Drehfrässystem, umfassend eine Drehspindel (50) und eine Frässpindel (40) mit einem Fräs- und/oder Schleifwerkzeugnach einem der Ansprüche 1 bis 11.

13. Drehbearbeitungs-Verfahren, insbesondere Drehfräsverfahren, beispielsweise zur Herstellung von Elementen für die prothetische Dentalversorgung, für die Otoplastik oder für ein medizintechnische Produkte, unter Verwendung eines Fräs- und/oder Schleifwerkzeugs, insbesondere eines Fräs- und/oder Schleifwerkzeugs nach einem der Ansprüche 1 bis 11, insbesondere unter Verwendung eines Drehbearbeitungssystems gemäß Anspruch 12, umfassend die folgenden Schritte:
- Rotieren eines Werkstückrohlings (30, 300) um eine Werkstückdrehachse (Rws);
- Rotieren des Fräs- und/oder Schleifwerkzeugs um eine Werkzeugdrehachse (Rwz);
- Einfahren des rotierenden Fräs- und/oder Schleifwerkzeug in den rotierenden Werkstückrohling (30, 300) zur spanenden Abnahme von Werkstückmaterial;
- Bearbeiten des rotierenden Werkstückrohlings (30, 300) in einem Bearbeitungsschritt durch spanende Abnahme von Werkstückmaterial in einem ersten Bearbeitungsvorgang und in einem zweiten Bearbeitungsvorgang, wobei der Werkstückrohling (30, 300) in dem ersten Bearbeitungsvorgang im Umfang eines ersten Zeitspanvolumens (ZSV₁) bearbeitet wird und in dem zweiten Bearbeitungsvorgang im Umfang eines zweiten Zeitspanvolumens (ZSV₂) bearbeitet wird, wobei das erste Zeitspanvolumen (ZSV₁) größer ist als das zweite Zeitspanvolumen (ZSV₂) und wobei der erste Bearbeitungsvorgang und der zweite Bearbeitungsvorgang wenigstens teilweise, insbesondere überwiegend, vorzugsweise im Wesentlichen vollständig, gleichzeitig ablaufen;
- Ausfahren des rotierenden Fräs- und/oder Schleifwerkzeug aus dem rotierenden Werkstück.

14. Drehbearbeitungs-Verfahren nach Anspruch 13, wobei der erste Bearbeitungsvorgang, insbesondere ausschließlich, von einem sich verjüngenden Abschnitt (18, 180) des Fräsers ausgeführt wird und/oder wobei der zweite Bearbeitungsvorgang, insbesondere ausschließlich, von dem teilweise kugelförmig ausgebildeten Stirnbereich (20, 200) des Fräs- und/oder Schleifwerkzeugs ausgeführt wird.

15. Drehbearbeitungs-Verfahren nach einem der Ansprüche 13 oder 14, **dadurch gekennzeichnet, dass** beim Einfahren des rotierenden Fräs- und/oder Schleifwerkzeugs in den rotierenden Werkstückrohling (30, 300) zuerst der erste Bearbeitungsvorgang beginnt und, insbesondere unmittelbar, nachfolgend der zweite Bearbeitungsvorgang beginnt,
und/oder
dass vor dem oder beim Ausfahren aus dem rotierenden Werkstück der erste Bearbeitungsvorgang endet und, insbesondere unmittelbar, nachfolgend der zweite Bearbeitungsvorgang endet.
